# EUROPÄISCHE PATENTSCHRIFT

(11) **EP 3 445 981 B1**
(45) Veröffentlichungstag und Bekanntmachung des Hinweises auf die Patenterteilung: **11.03.2020**
(21) Anmeldenummer: 17713619.9
(22) Anmeldetag: 24.03.2017
(51) Int. Cl.: F16C 11/06

(54) **KUGELGELENK, INSBESONDERE FÜR EIN FAHRWERK EINES KRAFTFAHRZEUGS, SOWIE VERFAHREN ZUR MONTAGE EINES SOLCHEN KUGELGELENKS**
BALL JOINT, IN PARTICULAR FOR A CHASSIS OF A MOTOR VEHICLE, AND METHOD FOR FITTING SUCH A BALL JOINT
ARTICULATION À ROTULE, EN PARTICULIER POUR UN TRAIN ROULANT D'UN VÉHICULE AUTOMOBILE, AINSI QUE PROCÉDÉ DE MONTAGE D'UNE TELLE ARTICULATION À ROTULE

(30) Priorität: 22.04.2016 DE 102016206864
(43) Veröffentlichungstag der Anmeldung: 27.02.2019
(73) Patentinhaber: ZF Friedrichshafen AG, 88046 Friedrichshafen (DE)
(72) Erfinder: REDDEHASE, Günter, 49448 Brockum (DE); ALTMEPPEN, Janina, 49716 Meppen (DE)
(86) Internationale Anmeldenummer: PCT/EP2017/057033
(87) Internationale Veröffentlichungsnummer: WO 2017/182230

(56) Entgegenhaltungen:
- WO-A2-2006/133693
- DE-A1- 3 723 548
- DE-A1-102008 003 463
- FR-A5- 2 216 853
- JP-A- 2001 263 331
- US-A- 2 424 431

## Beschreibung

Die Erfindung betrifft ein Kugelgelenk, insbesondere für ein Fahrwerk eines Kraftfahrzeugs, sowie ein Verfahren zur Montage eines solchen Kugelgelenks gemäß den Oberbegriffen der unabhängigen Patentansprüche.

Kugelgelenke für Fahrwerke von Kraftfahrzeugen sind aus dem Stand der Technik bekannt und werden beispielsweise in Spurstangen, Lenkstangen oder Panhardstäben sowie in Lenkerbauteilen, wie beispielsweise Längslenker oder Querlenker, verwendet. Aus der DE 10 2005 028 515 A1 ist ein als Axialkugelgelenk ausgebildetes Kugelgelenk mit einem Gehäuse bekannt, wobei das Gehäuse eine erste Öffnung aufweist, die von einer umlaufenden Umformkante umschlossen ist. Im Rahmen einer Montage des Kugelgelenks wird das Gehäuse durch Umformen der Umformkante in Richtung einer Gelenkkugel geschlossen. Durch das Schließen des Gehäuses wird die Gelenkkugel in dem Gehäuse dreh- und schwenkbeweglich eingefasst. Die für das Schließen des Gehäuses durch Umformen der umlaufenden Umformkante erforderliche Kraft wird allgemein als Schließkraft bezeichnet. Die Schließkraft wirkt bevorzugt in Richtung einer Mittelachse des Gehäuses. In der Praxis wird das Gehäuse während des Schließens desselben in einer Schließvorrichtung aufgenommen und die Schließkraft in die Umformkante eingeleitet. Die Schließkraft wird dann über das Gehäuse in ein Unterteil der Schließvorrichtung eingeleitet.

Aufgabe der Erfindung ist es, ein Kugelgelenk bereitzustellen, welches ein Gehäuse aufweist, das die Schließkraft sicher aufnimmt und wiederholgenau in eine Schließvorrichtung weiterleitet, ohne dass das Gehäuse dabei über das zulässige Maß hinaus beansprucht wird.

Diese Aufgabe wird gemäß der vorliegenden Erfindung gelöst durch ein gattungsgemäßes Kugelgelenk, welches zusätzlich die kennzeichnenden Merkmale des Patentanspruchs 1 aufweist.

Bevorzugte Ausführungsformen und Weiterbildungen sind Gegenstand der Unteransprüche und der nachfolgenden Beschreibung.

Die Erfindung sieht demnach ein Kugelgelenk vor, insbesondere für ein Fahrwerk eines Kraftfahrzeugs. Das Kugelgelenk weist ein Gehäuse mit einer ersten Öffnung auf, wobei die erste Öffnung von einer umlaufenden Umformkante umschlossen ist. Erfindungsgemäß weist das Gehäuse an einem der ersten Öffnung gegenüberliegenden Ende eine sich muldenförmig nach gehäuseinnen in Richtung der ersten Öffnung erstreckende Schließkraftaufnahme zur Aufnahme einer für ein Umformen der umlaufenden Umformkante erforderlichen Schließkraft auf.

Durch die Erfindung wird ein Kugelgelenk bereitgestellt, das die Schließkraft sicher aufnimmt und wiederholgenau in eine Schließvorrichtung weiterleitet, ohne dass das Gehäuse dabei über das zulässige Maß hinaus beansprucht wird. Die Schließkraftaufnahme bildet eine muldenförmige Ausnehmung des Gehäuses, durch welche das Kugelgelenk im Rahmen der Montage lagegenau in der Schließvorrichtung positioniert werden kann. Die Schließkraftaufnahme kann beispielsweise nach Art eines gekrümmten Teils einer Kugelsegmentoberfläche, auch Kugelkalotte genannt, ausgebildet sein. Die Schließkraftaufnahme kann eine zentral angeordnete Durchsetzung aufweisen, so dass die Schließkraftaufnahme lediglich durch einen ringförmigen Abschnitt der muldenförmigen Ausnehmung gebildet ist. Bei der Umformkante kann es sich um eine umlaufende Stauchkante oder eine umlaufende Bördelkante handeln. Beide Ausführungen sind vor der Montage zumindest im Wesentlichen hohlzylindrisch ausgebildet, wobei die Stauchkante eine größere Wandstärke aufweist als die Bördelkante. Das Gehäuse ist insbesondere einstückig als Gussteil oder als Schmiedeteil ausgebildet. Die sich muldenförmig nach gehäuseinnen erstreckende Schließkraftaufnahme weist insbesondere einen in eine Gehäuseoberfläche übergehenden Rand auf, welcher einen geschlossenen Linienzug bildet, der sich zumindest im Wesentlichen in einer Ebene erstreckt. Das Kugelgelenk kann als ein Radialkugelgelenk oder als ein Axialkugelgelenk ausgebildet sein.

Bei Kugelgelenken wird zwischen Axialkugelgelenken und Radialkugelgelenken unterschieden. Diese Unterscheidung richtet sich nach der jeweiligen Hauptbelastungsrichtung der im Einbauzustand auf Kugelzapfen der beiden Kugelgelenkarten einwirkenden Kräfte. Als Bezug für eine Definition der beiden Kugelgelenkarten dient die Position des nicht ausgelenkten Kugelzapfens, wobei der Kugelzapfen als nicht ausgelenkt anzusehen ist, wenn dieser aus der nicht ausgelenkten Position in alle möglichen Richtungen um den gleichen Winkelausschlag verschwenkt werden kann. Die nicht ausgelenkte Position wird daher auch als Nullstellung oder neutrale Winkelstellung bezeichnet. Die Hauptbelastungsrichtung eines Axialkugelgelenks liegt in Richtung der Längs-Mittenachse des Kugelzapfens, während die Hauptbelastungsrichtung bei einem Radialkugelgelenk senkrecht zu der Längs-Mittenachse des Kugelzapfens verläuft. Somit unterscheiden sich die beiden Kugelgelenktypen hinsichtlich der auf sie einwirkenden Belastungen und damit auch im Aufbau grundsätzlich voneinander. So besteht bei Axialkugelgelenken eine Hauptanforderung darin, eine Gelenkkugel des Kugelzapfens in einem Gehäuse des Axialkugelgelenks derart zu lagern, dass der Kugelzapfen bei einer Zugbelastung nicht aus dem Gehäuse herausgelöst werden kann. Die sogenannte Auszugskraft des Axialkugelgelenks ist ein wesentliches Qualitätskriterium eines Axialkugelgelenks. Bei Radialkugelgelenken wird der Kugelzapfen durch Kräfte belastet, die radial zu dessen Längs-Mittenachse auf diesen einwirken. Infolgedessen ist die Auszugskraft des Kugelzapfens bei Radialkugelgelenken geringer als bei Axialkugelgelenken, was sich in der Gehäuseausführung widerspiegelt.

Die Schließkraftaufnahme ist nach Art einer säulenförmigen Ausnehmung ausgebildet. Dies hat den Vorteil, dass ein Unterteil der Schließvorrichtung formschlüssig mit dem Gehäuse in Eingriff gebracht werden kann. Unter einer säulenförmigen Ausnehmung ist in diesem Zusammenhang eine Ausnehmung zu verstehen, die beispielsweise durch ein Eintauchen eines säulenförmigen Werkzeugstempels im Rahmen einer Kaltmassivumformung des Gehäuses in einen Innenraum desselben entsteht. Der säulenförmige Werkzeugstempel weist dabei zumindest über dessen Eintauchtiefe in das Gehäuse eine Querschnittsfläche auf, die in beliebigen Querschnitten parallel zu einer dem Gehäuse zugewandten, ebenen Stirnfläche des Werkzeugstempels jeweils der Stirnfläche entspricht. Die säulenförmige Ausnehmung kann beispielsweise nach Art eines Sacklochs ausgebildet sein. Unter einem Sackloch wird in diesem Zusammenhang eine Ausnehmung nach Art einer muldenförmigen Vertiefung verstanden, die das Gehäuse nicht vollständig durchdringt, also eine bestimmte Tiefe hat.

Vorteilhaft ist die Schließkraftaufnahme rotationssymmetrisch ausgebildet und weist eine Rotationsachse auf, die mit einer Mittelachse des Gehäuses zusammenfällt. Durch die rotationssymmetrische Ausbildung der Schließkraftaufnahme wird die Herstellung derselben vereinfacht, weil rotationssymmetrische Konturen allgemein mit geringerem Aufwand hergestellt werden können als nicht rotationssymmetrische Geometrien. Insbesondere, wenn neben der Schließkraftaufnahme zugleich das Gehäuse insgesamt rotationssymmetrisch ausgebildet ist, wird die Montage vereinfacht, weil bei einem Einlegen des Kugelgelenks in die Schließvorrichtung ein Ausrichten um die Mittelachse des Gehäuses entfällt. Durch das Zusammenfallen der Rotationsachse der Schließkraftaufnahme mit der Mittelachse des Gehäuses ergibt sich während des Schließens des Gehäuses zusätzlich eine vorteilhafte symmetrische Belastung desselben.

Insbesondere weist das Gehäuse eine zumindest in weiten Teilen rotationssymmetrische Außenumfangsfläche und eine ebenfalls zumindest größtenteils rotationssymmetrische Innenumfangsfläche auf. Die Rotationsachsen der Außenumfangsfläche und der Innenumfangsfläche sind deckungsgleich und fallen mit der Mittelachse des Gehäuses zusammen. Insbesondere wirkt die Schließkraft in Richtung der Mittelachse des Gehäuses. Wie zuvor beschrieben, weist die sich muldenförmig nach gehäuseinnen erstreckende Schließkraftaufnahme einen in eine Gehäuseoberfläche übergehenden Rand auf, welcher einen geschlossenen Linienzug bildet, der sich zumindest im Wesentlichen in einer Ebene erstreckt. Diese Ebene erstreckt sich vorzugsweise senkrecht zu der Mittelachse des Gehäuses.

Gemäß einer bevorzugten Ausgestaltung weist die Schließkraftaufnahme eine umlaufende, ebene Axialanlagefläche auf, welche sich senkrecht zu der Mittelachse erstreckt und in Richtung der Mittelachse freiliegt. Durch die Erstreckung der in sich ebenen Axialanlagefläche senkrecht zu der Mittelachse wird vermieden, dass während des Einleitens der Schließkraft in das Gehäuse in demselben unerwünschte Querkraftanteile auftreten. Durch die ebene Ausbildung der Axialanlagefläche wird eine günstige Weiterleitung der Schließkraft in das Unterteil der Schließvorrichtung gewährleistet, wobei das Unterteil vorteilhaft eine zu der Axialanlagefläche formkorrespondierende Axialaufnahmefläche aufweist. Durch eine vollflächige Anlage der beiden vorgenannten Flächen während des Schließens des Gehäuses wird die Flächenpressung in diesem Bereich gering gehalten. Mit der Eigenschaft, dass die Axialanlagefläche in Richtung der Mittelachse freiliegt, ist in diesem Zusammenhang gemeint, dass die Schließkraftaufnahme ausgehend von der Axialanlagefläche in Richtung der Mittelachse nach gehäuseaußen hin keine Hinterschneidungen aufweist. Dadurch ist ein ungehinderter Zugang der Schließvorrichtung zu der Axialanlagefläche möglich. Auf diese Weise kann das Unterteil der Schließvorrichtung vollflächig an der Axialanlagefläche anliegen.

Zweckmäßig ist die Axialanlagefläche als eine spanend bearbeitete Fläche ausgebildet. Insbesondere ist die Axialanlagefläche durch Drehen oder Fräsen hergestellt. Durch die spanende Bearbeitung wird gegenüber einer unbehandelten, gegossenen oder geschmiedeten Gehäuseoberfläche eine höhere Genauigkeit erzielt. Auf diese Weise können bei einer Einleitung der Schließkraft in das Gehäuse punktuelle Spannungsspitzen im Bereich der Axialanschlagfläche vermieden werden.

In bevorzugter Weise ist die Axialanlagefläche als eine Kreisringfläche ausgebildet. Die Schließkraftaufnahme weist in diesem Fall eine vorzugsweise zentral angeordnete Durchsetzung auf, die beispielsweise als ein Durchlass für weitere Bauteile des Kugelgelenks dienen kann.

Vorteilhaft weist die Schließkraftaufnahme eine als eine Zylindermantelfläche ausgebildete Radialzentrierfläche auf, welche angrenzend an die Axialanlagefläche angeordnet ist. Durch die Ausbildung der Radialzentrierfläche als eine Zylindermantelfläche wird eine günstige Positionierhilfe für das Einlegen des Kugelgelenks in das Unterteil der Schließvorrichtung bereitgestellt. Darüber hinaus bildet die Radialzentrierfläche eine Aufnahmemöglichkeit, mit der das Kugelgelenk während dessen Montage sicher von dem Unterteil der Schließvorrichtung aufgenommen werden kann, wobei das Unterteil vorzugsweise eine zu der Radialzentrierfläche formkorrespondierende Radialaufnahmefläche aufweist. Die Radialzentrierfläche ist insbesondere als eine, insbesondere durch Drehen oder Zirkularfräsen, spanend bearbeitete Fläche ausgebildet. Durch die benachbart angrenzende Anordnung der Axialanlagefläche und der Radialzentrierfläche wird die muldenförmige Ausprägung der Schließkraftaufnahme umgesetzt.

Gemäß einer vorteilhaften Weiterbildung weist die Schließkraftaufnahme an einem nach gehäuseaußen weisenden Rand eine umlaufende Fase auf. Die Fase stellt eine Fügehilfe dar, durch die das Einlegen des Kugelgelenks in die Schließvorrichtung erleichtert wird. Nach gehäuseaußen hin weist die Fase einen in die Gehäuseoberfläche übergehenden, bereits zuvor beschriebenen Rand auf, welcher einen geschlossenen Linienzug bildet und sich zumindest im Wesentlichen in einer senkrecht zu der Mittelachse angeordneten Ebene erstreckt.

Bevorzugt weist das Kugelgelenk einen mit einer Gelenkkugel dreh- und schwenkbeweglich in dem Gehäuse gelagerten Kugelzapfen auf, welcher sich in einem nicht ausgelenkten Zustand aus einer zweiten Öffnung des Gehäuses heraus in Richtung der Mittelachse erstreckt. Die zweite Öffnung des Gehäuses ist an einem der ersten Öffnung gegenüberliegenden Ende des Gehäuses angeordnet, wobei die erste Öffnung von der umlaufenden Umformkante umschlossen ist. Die Axialanlagefläche ist bei dieser Ausgestaltung als eine Kreisringfläche mit einer zentralen Durchsetzung ausgebildet, aus welcher sich der Kugelzapfen aus dem Gehäuse heraus erstreckt. Durch das Schließen des Gehäuses wird die Gelenkkugel in dem Gehäuse dreh- und schwenkbar eingefasst. Das Schließen des Gehäuses erfolgt dabei durch Umformung, insbesondere Kaltumformung, der Umformkante in Richtung der Gelenkkugel.

Der Kugelzapfen ist als nicht ausgelenkt anzusehen, wenn dieser aus der nicht ausgelenkten Position in alle möglichen Richtungen um den gleichen Winkelausschlag verschwenkt werden kann. Die nicht ausgelenkte Position wird daher auch als Nullstellung oder neutrale Winkelstellung bezeichnet. In der nicht ausgelenkten Position des insbesondere zumindest im Wesentlichen rotationssymmetrisch ausgebildeten Kugelzapfens fällt dessen Rotationsachse mit der Mittelachse des Gehäuses zusammen. Neben der zuvor beschriebenen Ausführungsform, nach der sich der Kugelzapfen aus der zweiten Öffnung des Gehäuses heraus in Richtung der Mittelachse erstreckt, ist es alternativ auch möglich, dass sich der Kugelzapfen aus der ersten, von der Umformkante umschlossenen, Öffnung des Gehäuses heraus erstreckt. Bei dieser Ausgestaltung ist die Schließkraftaufnahme im Bereich der zweiten Öffnung des Gehäuses angeordnet, wobei die zweite Öffnung an einem der ersten Öffnung gegenüberliegenden Ende des Gehäuses angeordnet ist. Die Schließkraftaufnahme ist in diesem Fall insbesondere als eine sacklochartige Ausnehmung des Gehäuses mit nach gehäuseaußen weisender zweiter Öffnung ausgebildet.

Weiterhin bevorzugt liegt die Axialanlagefläche bei einer Projektion in Richtung der Mittelachse teilweise außerhalb der Gelenkkugel. Der größte Durchmesser der Axialanlagefläche ist demnach größer als der Durchmesser der Gelenkkugel. Auf diese Weise wird ein für Axialkugelgelenke relativ hoher Winkelausschlag des Kugelzapfens möglich, wobei der Winkelausschlag einem bei Radialkugelgelenken üblichen maximalen Winkelausschlag angeglichen ist. Somit kann das Kugelgelenk, wenn es als Axialkugelgelenk ausgebildet ist, in Bezug auf den maximal möglichen Winkelausschlag des Kugelzapfens ein Radialkugelgelenk ersetzen, womit allgemein neue Einsatzmöglichkeiten für Axialkugelgelenke geschaffen werden. Bedingt durch den gegenüber dem Durchmesser der Gelenkkugel größeren Durchmesser der Axialanlagefläche wird die Schließkraft in Richtung der Mittelachse direkt über einen massiven Wandabschnitt des Gehäuses übertragen, wodurch während des Schließens des Gehäuses unzulässige Verformungen desselben vermieden werden.

Zweckmäßig ist die erste Öffnung des Gehäuses durch einen Boden verschlossen. Insbesondere weist das Gehäuse in unverschlossenem Zustand desselben, also bei noch nicht umgeformter Umformkante, im Bereich der ersten Öffnung einen Ausgangsdurchmesser auf, der größer ist als der Durchmesser der Gelenkkugel. Dadurch kann die Gelenkkugel im Rahmen der Montage des Kugelgelenks durch die noch nicht fertiggestellte erste Öffnung in das Gehäuse eingeführt werden. Das Gehäuse wird im Bereich der ersten Öffnung nach der Montage des Kugelzapfens und gegebenenfalls weiterer Bauteile des Kugelgelenks, wie beispielsweise einer Lagerschale, durch den Boden verschlossen, um die Gelenkkugel und deren Lagerung vor Verunreinigungen zu schützen. Darüber hinaus kann der Boden dazu ausgelegt sein, im Einbauzustand des Kugelgelenks in Richtung der Mittelachse wirkende Kräfte aufzunehmen, insbesondere bei einer Ausbildung des Kugelgelenks als Axialkugelgelenk. Der Boden kann als Drehteil oder als rotationssymmetrisches Fließpressteil mit in Richtung der Mittelachse variierender Dicke ausgebildet sein oder alternativ als deckelförmiges Blechteil.

Vorteilhaft weisen der Boden und die umlaufende Umformkante eine gemeinsame Kontaktfläche auf, welche als eine Kegelstumpfmantelfläche oder als eine Kreisringfläche ausgebildet ist. Während des Schließens des Gehäuses wird der Boden vollumfänglich und dichtend von der Umformkante eingefasst. Bei Axialkugelgelenken erfolgt das Schließen des Gehäuses häufig durch ein Stauchen der Umformkante in Richtung einer Gelenkkugel, wobei die Umformkante in diesem Fall auch als Stauchkante bezeichnet wird. Die Stauchkante weist in unverformtem Ausgangszustand, senkrecht zu der Mittelachse gemessen, eine relativ hohe Dicke auf, weshalb ein Umlegen der Stauchkante um 90 Grad nicht möglich ist, sondern lediglich ein Anstellen um circa 45 Grad. Die gemeinsame Kontaktfläche des insbesondere als Drehteil oder als rotationssymmetrisches Fließpressteil mit in Richtung der Mittelachse variierender Dicke ausgebildeten Bodens und der umlaufenden Stauchkante ist daher als Kegelstumpfmantelfläche ausgebildet.

Bei Radialkugelgelenken erfolgt das Schließen des Gehäuses häufig durch Umbördeln, insbesondere Rollbördeln, der Umformkante in Richtung einer Gelenkkugel, wobei die Umformkante in diesem Fall auch als Bördelkante bezeichnet wird. Die Bördelkante weist in unverformtem Ausgangszustand, senkrecht zu der Mittelachse gemessen, eine relativ geringe Dicke auf, weshalb ein Umlegen der Bördelkante um circa 90 Grad möglich ist. Die gemeinsame Kontaktfläche des insbesondere als deckelförmiges Blechteil ausgebildeten Bodens und der umlaufenden Bördelkante ist daher bei dieser Ausgestaltung als Kreisringfläche ausgebildet.

Bevorzugt weist der Boden einen einstückig mit diesem ausgebildeten und sich in Richtung der Mittelachse erstreckenden Gewindezapfen auf. Der Gewindezapfen dient zur Anbindung des insbesondere als Axialkugelgelenk ausgebildeten Kugelgelenks an ein Anschlussbauteil. Durch die einstückige Ausbildung ist eine Funktionsintegration möglich, wobei der Boden mit integriertem Gewindezapfen vorzugsweise als Drehteil ausgebildet ist, insbesondere als Automatendrehteil. Der Boden weist insbesondere an dessen Außenumfang eine Mitnahmegeometrie auf, die beispielsweise zum Aufsetzen eines Maulschlüssels geeignet ist, um auf diese Weise den Gewindezapfen des Bodens mit dem Anschlussbauteil verbinden zu können. Die Mitnahmegeometrie kann beispielsweise aus zumindest zwei parallel beabstandeten Schlüsselflächen, insbesondere aus einem Sechskant, gebildet sein. Insbesondere weist das Gehäuse innenliegend eine als Kreisringfläche ausgebildete Anschlagfläche für den Boden auf, wobei sich die Anschlagfläche senkrecht zu der Mittelachse erstreckt. Durch die gehäuseinnen angeordnete und nach gehäuseaußen zu dem Boden hin freiliegende Anschlagfläche wird ein Axialanschlag bereitgestellt, der es ermöglicht, den Boden im Rahmen der Montage des Kugelgelenks in Richtung der Mittelachse reproduzierbar zu positionieren.

Vorteilhafterweise ist das Gehäuse hülsenartig ausgebildet mit einem das Gehäuse vollständig in Richtung der Mittelachse durchsetzenden Gehäuseinnenraum. Mit einem derartig ausgebildeten Gehäuse kann die zuvor beschriebene Ausführungsform realisiert werden, wonach sich der Kugelzapfen aus einer zweiten Öffnung des Gehäuses heraus erstreckt. Das hülsenartig ausgebildete Gehäuse ist insbesondere vollständig rotationssymmetrisch, also beispielsweise ohne Mitnahmegeometrie, ausgebildet.

In vorteilhafter Weiterbildung weist das Gehäuse einen einstückig mit diesem verbundenen Anschlusszapfen auf, welcher sich zumindest im Wesentlichen senkrecht zu der Mittelachse erstreckt. Auf diese Weise wird ein Winkelgelenk bereitgestellt, wobei unter einem Winkelgelenk im Zusammenhang mit der vorliegenden Erfindung ein Kugelgelenk zu verstehen ist, welches eine erste zapfenartige Anschlussmöglichkeit für ein erstes Bauteil und eine zumindest im Wesentlichen senkrecht hierzu angeordnete zweite zapfenartige Anschlussmöglichkeit für ein zweites Bauteil bietet. Da der Kugelzapfen unter anderem drehbeweglich in dem Gehäuse gelagert ist, kann dieser, beispielsweise über eine Gewindeverbindung, längenveränderbar an ein Anschlussbauteil, wie zum Beispiel eine Lenkstange oder eine Spurstange, angebunden werden. Der Anschlusszapfen kann auch leicht gekröpft ausgebildet sein und sich aufgrund dessen nicht exakt senkrecht zu der Mittelachse erstrecken.

Die Erfindung bezieht sich ferner auf ein Verfahren zur Montage eines Kugelgelenks wie zuvor beschrieben, wobei während eines Schließens des Gehäuses ein Gegenhalter einer Schließvorrichtung von der Schließkraftaufnahme umschließend aufgenommen wird. Der Gegenhalter ist insbesondere dem Unterteil der Schließvorrichtung zugeordnet, wobei die Schließvorrichtung als Stauchvorrichtung oder als Bördelvorrichtung, insbesondere als Rollbördelvorrichtung, ausgebildet sein kann. Die durch die Schließvorrichtung aufgebrachte Schließkraft wirkt insbesondere in Richtung einer Mittelachse der Schließvorrichtung, wobei die Mittelachse der Schließvorrichtung vorzugsweise deckungsgleich mit der Mittelachse des Gehäuses ist. Aufgrund der umschließenden Aufnahme des Gegenhalters durch die Schließkraftaufnahme ist gewährleistet, dass die in Richtung der Mittelachse des Gehäuses wirkende Schließkraft von dem Gehäuse sicher in den Gegenhalter eingeleitet werden kann. Der Gegenhalter ist formkorrespondierend zu der Schließkraftaufnahme ausgebildet und liegt vollflächig an der Axialanlagefläche an.

Die Radialzentrierfläche und eine korrespondierende Fläche des Gegenhalters weisen zueinander insbesondere eine Spielpassung mit relativ geringem Spiel auf, damit einerseits das Gehäuse des Kugelgelenks einfach in die Schließvorrichtung eingelegt werden kann und andererseits insbesondere während des Schließvorgangs eine sichere Lagefixierung des Gehäuses in der Schließvorrichtung gegeben ist. Die formkorrespondierenden Flächen der Schließkraftaufnahme und des Gegenhalters sind insbesondere spanend bearbeitet und weisen daher eine hohe Form- und Lagegenauigkeit auf. Bedingt durch den gegenüber dem Durchmesser der Gelenkkugel größeren Durchmesser der Axialanlagefläche wird die Schließkraft in Richtung der Mittelachse direkt über den massiven Wandabschnitt des Gehäuses übertragen, wodurch während des Schließens des Gehäuses unzulässige Verformungen desselben vermieden werden.

Im Folgenden wird die Erfindung anhand lediglich Ausführungsbeispiele darstellender Zeichnungen näher erläutert, wobei sich gleiche und jeweils um 100 erhöhte Bezugszeichen auf gleiche oder sich entsprechende Bauteile oder Elemente mit einem zumindest im Wesentlichen identischen Aufbau beziehen. Dabei zeigt:
- Fig. 1: in einer zweidimensionalen Darstellung ein Kugelgelenk gemäß dem Stand der Technik;
- Fig. 2: in einer perspektivischen Schnittdarstellung ein Kugelgelenk gemäß einer ersten Ausführungsform der Erfindung;
- Fig. 3: in einer Schnittdarstellung einen Teil des Kugelgelenks aus Fig. 2;
- Fig. 4: in einer perspektivischen Schnittdarstellung ein Kugelgelenk gemäß einer zweiten Ausführungsform der Erfindung;
- Fig. 5: in einer Schnittdarstellung einen Teil des Kugelgelenks aus Fig. 4;
- Fig. 6: in einer Schnittdarstellung ein Gehäuse des Kugelgelenks aus Fig. 5;
- Fig. 7: in einer perspektivischen Darstellung das Kugelgelenk gemäß der zweiten Ausführungsform;
- Fig. 8a: in einer teilweise geschnittenen Darstellung eine in einer geöffneten Stellung abgebildete Schließvorrichtung zum Schließen des Gehäuses aus Fig. 6 und
- Fig. 8b: in einer teilweise geschnittenen Darstellung die Schließvorrichtung aus Fig. 8a in einer geschlossenen Stellung.

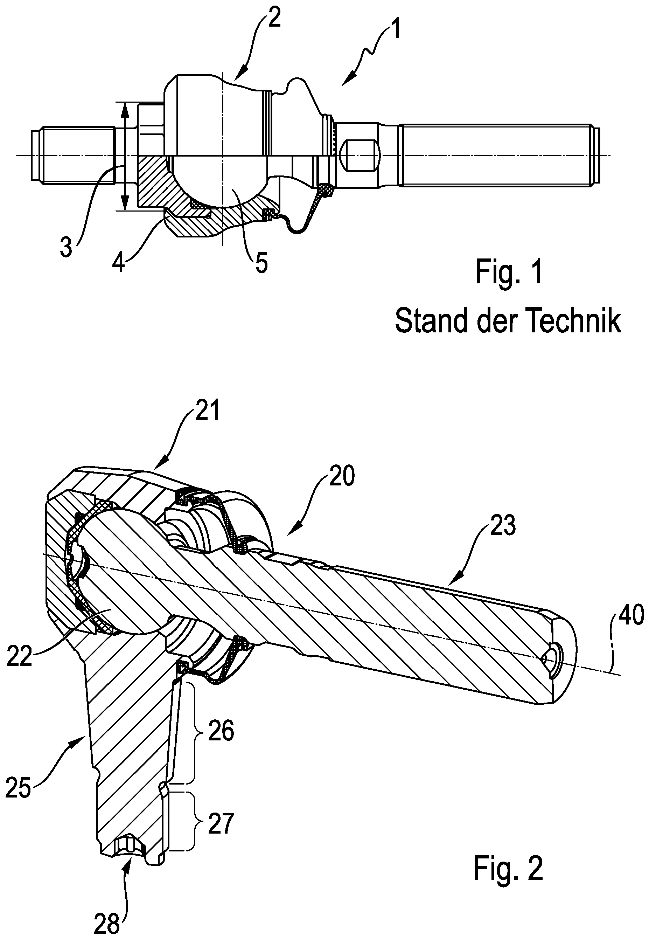

Fig. 1 zeigt ein als Axialkugelgelenk 1 ausgebildetes Kugelgelenk mit einem Gehäuse 2, wobei das Gehäuse 2 eine erste Öffnung 3 aufweist, die von einer umlaufenden Umformkante 4 umschlossen ist. Im Rahmen einer Montage des Axialkugelgelenks 1 wird die Umformkante 4 in Richtung einer Gelenkkugel 5 umgeformt und auf diese Weise das Gehäuse 2 geschlossen. Durch das Schließen des Gehäuses 2 wird die Gelenkkugel 5 in dem Gehäuse 2 dreh- und schwenkbeweglich eingefasst.

In Fig. 2 ist ein als Axialkugelgelenk 20 ausgebildetes Kugelgelenk dargestellt, wobei das Axialkugelgelenk 20 als ein Winkelgelenk ausgebildet ist und ein Gehäuse 21 und einen mit einer Gelenkkugel 22 dreh- und schwenkbeweglich in dem Gehäuse 21 gelagerten Kugelzapfen 23 aufweist. Der in nicht ausgelenktem Zustand dargestellte Kugelzapfen 23 erstreckt sich in Richtung einer Mittelachse 40 des Gehäuses 21 aus diesem heraus, wobei das Gehäuse 21 einen einstückig mit diesem verbundenen Anschlusszapfen 25 aufweist, welcher sich senkrecht zu der Mittelachse 40 erstreckt. Der Anschlusszapfen 25 weist einen konischen Abschnitt 26 zur Anbindung des Anschlusszapfens 25 an einen Radträger auf. Weiterhin weist der Anschlusszapfen 25 an dessen freien Ende ein Befestigungsgewinde 27 und stirnseitig eine als Innenkontur ausgebildete Mitnahmegeometrie 28 auf, wobei die Mitnahmegeometrie als Innensechskantgeometrie 28 ausgebildet ist.

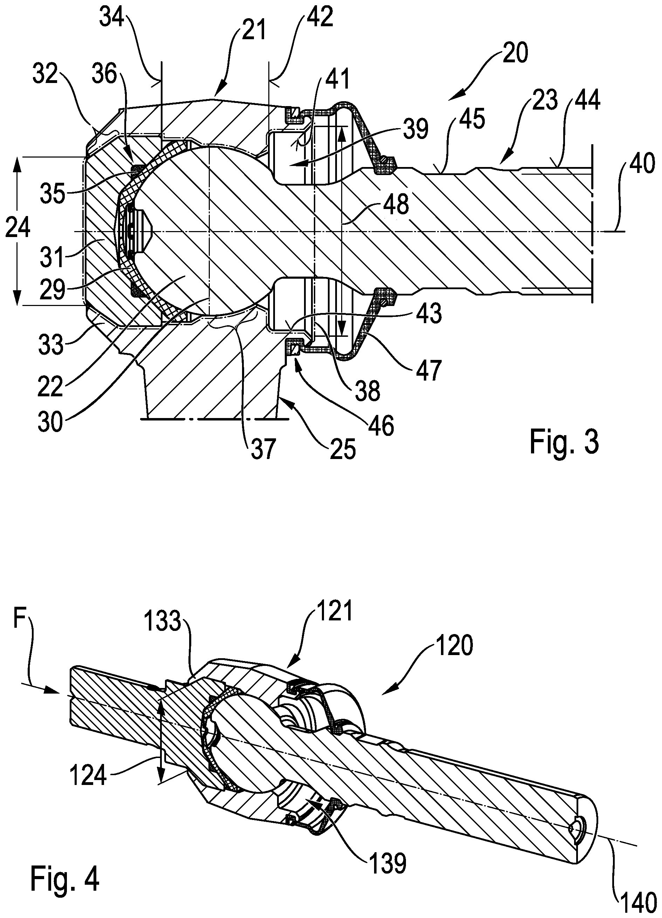

Wie aus Fig. 3 hervorgeht, ist in dem Gehäuse 21 eine Kunststofflagerschale 29 angeordnet, welche die Gelenkkugel 22 zu weniger als deren Hälfte anliegend umschließt. Die Kunststofflagerschale 29 ist rotationssymmetrisch mit einer sich in Richtung der Mittelachse 40 erstreckenden Rotationsachse ausgeführt und erstreckt sich nicht über den sogenannten Äquator 30 der Gelenkkugel 22 hinaus. Unter dem Äquator 30 ist in diesem Zusammenhang die Umfangslinie einer Kreisfläche zu verstehen, die den Durchmesser der Gelenkkugel 22 aufweist und sich zugleich bei nicht ausgelenktem Kugelzapfen 23 senkrecht zu der Mittelachse 40 erstreckt. Eine erste Öffnung 24 des Gehäuses 21, die auch als bodenseitige Öffnung bezeichnet wird, ist durch einen Boden 31 verschlossen, wobei der Boden 31 als Drehteil mit in Richtung der Mittelachse 40 variierender Dicke ausgebildet ist. Die erste Öffnung 24 ist in Richtung der Mittelachse 40 gegenüberliegend zu einer zweiten Öffnung 48, die auch als zapfenseitige Öffnung bezeichnet wird, angeordnet. Der Kugelzapfen 23 erstreckt sich durch die zweite Öffnung 48 aus dem Gehäuse 21 heraus.

Der Boden 31 und das Gehäuse 21 weisen eine gemeinsame Kontaktfläche 32 auf, die nach Art einer Kegelstumpfmantelfläche ausgebildet ist. Die Kegelstumpfmantelfläche erstreckt sich ausgehend von der ersten Öffnung 24 nach gehäuseinnen und ist derart ausgerichtet, dass deren Rotationsachse in Richtung der Mittelachse 40 verläuft und das Ende der Kegelstumpfmantelfläche mit dem geringeren Durchmesser nach gehäuseaußen weist. In dem Axialschnitt gemäß Fig. 3 schließt die Kegelstumpfmantelfläche zu der Mittelachse 40 einen Winkel von etwa 45 Grad ein. In der gemeinsamen Kontaktfläche 32 liegen eine dem Gehäuse 21 zugeordnete Kontaktfläche und eine formkorrespondierenden Kontaktfläche des Bodens 31 aneinander an.

In dem in Fig. 3 dargestellten Zusammenbauzustand liegt eine umlaufende Umformkante 33 des Gehäuses 21 im Bereich der gemeinsamen Kontaktfläche 32 an dem Boden 31 an. Die Kontaktfläche der umlaufenden Umformkante, die als eine Stauchkante 33 ausgebildet ist, ist vor einem Einpressen des Bodens 31 in das Gehäuse 21 umlaufend nach Art einer Zylindermantelfläche ausgebildet. Das Anlegen der umlaufenden Stauchkante 33 an den Boden 31 unter Ausbildung der gemeinsamen Kontaktfläche 32 erfolgt durch ein vollumfänglich gleichzeitiges Stauchen der Stauchkante 33 mittels einer sich in Richtung der Mittelachse 40 auf das Gehäuse 21 zu bewegenden Stauchglocke. Das Gehäuse 21 weist innenliegend eine als Kreisringfläche ausgebildete Anschlagfläche 34 für den Boden 31 auf, wobei sich die Anschlagfläche 34 senkrecht zu der Mittelachse 40 erstreckt. Zwischen dem Boden 31 und der Kunststofflagerschale 29 ist ein in Richtung der Mittelachse 40 wirkendes Federelement angeordnet, welches als ein umlaufender Elastomerring 35 ausgebildet ist. Der Elastomerring 35 ist in eine Ringnut 36 des Bodens 31 eingelassen und somit gegen eine unerwünschte Verlagerung gesichert.

Die Gelenkkugel 22 liegt in einem Anlagebereich 37 des Gehäuses 21 unmittelbar an dem Gehäuse 21 an. Auf diese Weise stützt sich die Gelenkkugel 22 in dem Anlagebereich 37 direkt an dem Gehäuse 21 ab, was zu einer hohen Belastbarkeit des Kugelzapfens 23 in der Richtung der Mittelachse 40 führt. Der Anlagebereich 37 des Gehäuses 21 ist als eine Kugelzone mit einer in Richtung der Mittelachse 40 verlaufenden Rotationsachse ausgebildet. In Richtung der Mittelachse 40 ist der Anlagebereich 37 mit Bezug auf die Gelenkkugel 22 gegenüberliegend zu dem Bereich angeordnet, in dem die Kunststofflagerschale 29 an der Gelenkkugel 22 anliegt. Der Anlagebereich 37 des Gehäuses 21 erstreckt sich in Richtung der Mittelachse 40 nicht über den Äquator 30 der Gelenkkugel 22 hinaus, weil die Gelenkkugel 22 des Kugelzapfens 23 in diesem Fall nicht montierbar wäre. Eine Randschicht des Anlagebereichs 37 ist oberflächengehärtet, wobei die Oberflächenhärtung als Induktionshärtung ausgebildet ist.

In einem Gehäuseinnenraum 38 ist eine Schließkraftaufnahme 39 nach Art einer säulenförmigen Ausnehmung ausgebildet, wobei sich die Schließkraftaufnahme 39 ausgehend von der zweiten Öffnung 48 des Gehäuses 21 muldenförmig nach gehäuseinnen in Richtung der ersten Öffnung 24 erstreckt. Der Gehäuseinnenraum 38 ist in Fig. 3 von einer Strich-Punkt-Linie umschlossen dargestellt, wobei die Strich-Punkt-Linie der Übersichtlichkeit halber nicht deckungsgleich mit dem den Gehäuseinnenraum 38 begrenzenden Konturverlauf ist. Die Schließkraftaufnahme 39 ist rotationssymmetrisch ausgebildet und weist eine Rotationsachse auf, die sich mit der Mittelachse 40 des Gehäuses 21 deckt. An einem nach gehäuseaußen weisenden Rand weist die Schließkraftaufnahme 39 eine umlaufende Fase 41 auf, wodurch das Einlegen in eine Stauchvorrichtung erleichtert wird.

Die Schließkraftaufnahme 39 weist eine umlaufende Axialanlagefläche 42 auf, welche sich senkrecht zu der Mittelachse 40 erstreckt, als eine Kreisringfläche ausgebildet ist und in Richtung der Mittelachse 40 freiliegt. Bei einer Projektion in Richtung der Mittelachse 40 liegt die Axialanlagefläche 42 teilweise außerhalb der Gelenkkugel 22. Der größte Durchmesser der Axialanlagefläche 42 ist größer als der größte Durchmesser des Bodens 31, der mit dem größten Durchmesser der Anschlagfläche 34 identisch ist. Zugleich ist in Richtung der Mittelachse 40 zwischen der Anschlagfläche 34 und der Axialanlagefläche 42 kein Innendurchmesser des Gehäuses 21 größer als der größte Durchmesser des Bodens 31. Weiterhin weist die Schließkraftaufnahme 39 eine umlaufende Radialzentrierfläche 43 auf, welche an die Axialanschlagfläche 42 grenzt und als eine sich in Richtung der Mittelachse 40 erstreckende Zylindermantelfläche ausgebildet ist.

In der Richtung der Mittelachse 40 ist auf gleicher Höhe wie die Radialzentrierfläche 43 in eine Außenwandung des Gehäuses 21 eine umlaufende Balgnut 46 zur Aufnahme eines ebenfalls umlaufenden Anschlussbereichs eines Dichtungsbalgs 47 eingelassen. Durch die gehäuseendseitige Anordnung der Balgnut 46 kann der Dichtungsbalg 47 in Richtung der Mittelachse 40 relativ kurz ausgeführt werden. Der Kugelzapfen 23 ist mit einem Außengewinde 44 ausgestaltet, dessen Gewindelänge in Richtung der Mittelachse 40 größer ist als die Gewindelänge des Befestigungsgewindes 27 des Anschlusszapfens 25. Weiterhin weist der Kugelzapfen 23 an dessen Außenumfang zwei parallel beabstandete Schlüsselflächen 45 auf.

Fig. 4 zeigt ein Kugelgelenk, welches als Axialkugelgelenk 120 ausgebildet ist. Das Kugelgelenk 120 weist ein Gehäuse 121 mit einer ersten Öffnung 124 auf, wobei die erste Öffnung 124 von einer umlaufenden Umformkante 133 umschlossen ist. Das Gehäuse 121 weist an einem der ersten Öffnung 124 gegenüberliegenden Ende eine sich muldenförmig nach gehäuseinnen in Richtung der ersten Öffnung 124 erstreckende Schließkraftaufnahme 139 zur Aufnahme einer für ein Umformen der umlaufenden Umformkante 133 erforderlichen Schließkraft F auf. Die sich muldenförmig nach gehäuseinnen erstreckende Schließkraftaufnahme 139 weist einen in eine Gehäuseoberfläche übergehenden Rand auf, welcher einen geschlossenen Linienzug bildet und sich zumindest im Wesentlichen in einer Ebene erstreckt. Die umlaufende Umformkante ist als eine umlaufende Stauchkante 133 ausgebildet.

Die Schließkraftaufnahme 139 ist rotationssymmetrisch nach Art einer säulenförmigen Ausnehmung ausgebildet und weist eine Rotationsachse auf, die mit einer Mittelachse 140 des Gehäuses 121 zusammenfällt. Das Gehäuse 121 weist eine rotationssymmetrische Außenumfangsfläche und eine rotationssymmetrische Innenumfangsfläche auf. Die Rotationsachsen der Außenumfangsfläche und der Innenumfangsfläche sind deckungsgleich und fallen mit der Mittelachse 140 des Gehäuses 121 zusammen. Die Schließkraft F wirkt in Richtung der Mittelachse 140 des Gehäuses 121. Wie zuvor beschrieben, weist die sich muldenförmig nach gehäuseinnen erstreckende Schließkraftaufnahme 139 einen in eine Gehäuseoberfläche übergehenden Rand auf, welcher einen geschlossenen Linienzug bildet, der sich senkrecht zu der Mittelachse 140 des Gehäuses 121 erstreckt.

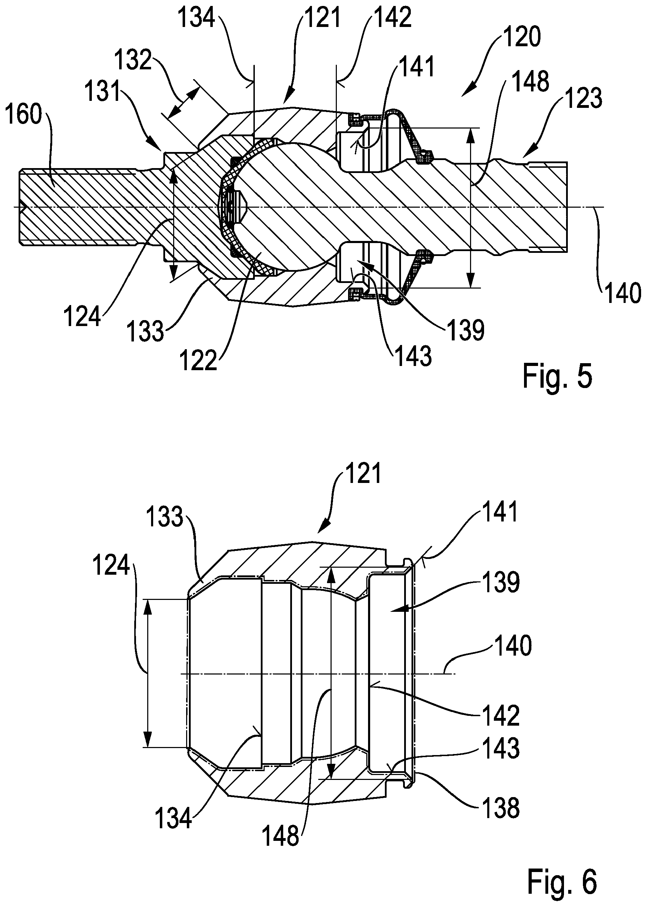

Wie Fig. 5 zu entnehmen ist, weist die Schließkraftaufnahme eine umlaufende, ebene Axialanlagefläche 142 auf, welche sich senkrecht zu der Mittelachse 140 erstreckt und in Richtung der Mittelachse 140 freiliegt. Die Axialanlagefläche 142 ist als eine Kreisringfläche ausgebildet und spanend durch Drehen hergestellt. Weiterhin weist die Schließkraftaufnahme 139 eine als eine Zylindermantelfläche ausgebildete Radialzentrierfläche 143 auf, welche angrenzend an die Axialanlagefläche 142 angeordnet und ebenfalls durch Drehen hergestellt ist. An einem nach gehäuseaußen weisenden Rand weist die Schließkraftaufnahme 139 eine umlaufende Fase 141 auf. Das Kugelgelenk 120 weist einen mit einer Gelenkkugel 122 dreh- und schwenkbeweglich in dem Gehäuse 121 gelagerten Kugelzapfen 123 auf, welcher sich in einem nicht ausgelenkten Zustand aus einer zweiten Öffnung 148 des Gehäuses 121 heraus in Richtung der Mittelachse 140 erstreckt. Die zweite Öffnung 148 des Gehäuses 121, die auch als zapfenseitige Öffnung bezeichnet wird, ist an einem der ersten Öffnung 124 gegenüberliegenden Ende des Gehäuses 121 angeordnet. Die erste Öffnung 124, die auch als bodenseitige Öffnung bezeichnet wird, ist von der umlaufenden Stauchkante 133 umschlossen. Die Axialanlagefläche 142 ist als eine Kreisringfläche mit einer zentralen Durchsetzung ausgebildet, aus welcher sich der Kugelzapfen 123 aus dem Gehäuse 121 heraus erstreckt. Durch das Schließen des Gehäuses 121 wird die Gelenkkugel 122 in dem Gehäuse 121 dreh- und schwenkbeweglich eingefasst.

In der in Fig. 5 dargestellten, nicht ausgelenkten Position des im Wesentlichen rotationssymmetrisch ausgebildeten Kugelzapfens 123 fällt dessen Rotationsachse mit der Mittelachse 140 des Gehäuses 121 zusammen. Bei einer Projektion in Richtung der Mittelachse 140 liegt die Axialanlagefläche 142 teilweise außerhalb der Gelenckugel 122. Der größte Durchmesser der Axialanlagefläche 142 ist demnach größer als der Durchmesser der Gelenkkugel 122. Die erste Öffnung 124 des Gehäuses 121 ist durch einen Boden 131 verschlossen. In unverschlossenem Zustand, also bei noch nicht umgeformter Umformkante 133, weist das Gehäuse 121 im Bereich der ersten Öffnung 124 einen Ausgangsdurchmesser 181 auf, der größer ist als der Durchmesser der Gelenkkugel 122. Der Boden 131 des als Axialkugelgelenk 120 ausgebildeten Kugelgelenks ist als Drehteil mit in Richtung der Mittelachse 140 variierender Dicke ausgebildet und aufgrund dessen dazu ausgelegt, im Einbauzustand des Axialkugelgelenks 120 in Richtung der Mittelachse 140 wirkende Kräfte aufzunehmen.

Der Boden 131 und die umlaufende Stauchkante 133 weisen eine gemeinsame Kontaktfläche 132 auf, welche als eine Kegelstumpfmantelfläche ausgebildet ist. Während des Schließens des Gehäuses 121 wird der Boden 131 vollumfänglich und dichtend von der Stauchkante 133 eingefasst.

Der Boden 131 weist einen einstückig mit diesem ausgebildeten und sich in Richtung der Mittelachse 140 erstreckenden Gewindezapfen 160 auf. Der Gewindezapfen 160 dient zur Anbindung des Axialkugelgelenks 120 an ein Anschlussbauteil. Innenliegend weist das Gehäuse 121 eine als Kreisringfläche ausgebildete Anschlagfläche 134 für den Boden 131 auf, wobei sich die Anschlagfläche 134 senkrecht zu der Mittelachse 140 erstreckt.

Fig. 6 zeigt, dass das Gehäuse 121 hülsenartig und vollständig rotationssymmetrisch ausgebildet ist mit einem das Gehäuse 121 vollständig in Richtung der Mittelachse 140 durchsetzenden Gehäuseinnenraum 138. Der Gehäuseinnenraum 138 ist wiederum von einer Strich-Punkt-Linie umschlossen dargestellt, wobei die Strich-Punkt-Linie der Übersichtlichkeit halber nicht deckungsgleich mit dem den Gehäuseinnenraum 138 begrenzenden Konturverlauf ist. An die Axialanlagefläche 142 der Schließkraftaufnahme 139 schließt sich die Radialzentrierfläche 143 an. Zwischen der Radialzentrierfläche 143 und dem die zweite Öffnung 148 umschließenden Rand der Schließkraftaufnahme 139 ist die umlaufende Fase 141 angeordnet. Der Rand der Schließkraftaufnahme 139, an dem diese in die Gehäuseoberfläche übergeht, bildet zugleich den Übergang von dem Gehäuseinnenraum 138 zu der Außenoberfläche des Gehäuses 121. Die Anschlagfläche 134 ist als eine sich senkrecht zu der Mittelachse 140 erstreckende Linie dargestellt, womit deutlich wird, dass sich die Anschlagfläche 134 senkrecht zu der Mittelachse 140 erstreckt. Die umlaufende Stauchkante 133 ist zur Veranschaulichung in gestauchtem Zustand, also im Fertigteilzustand, dargestellt. An dem der Schließkraftaufnahme 139 in Richtung der Mittelachse 140 gegenüberliegenden Ende des Gehäuses 121 ist die erste Öffnung 124 angeordnet, die zugleich den kleinsten Durchmesser der umlaufenden Stauchkante 133 bildet.

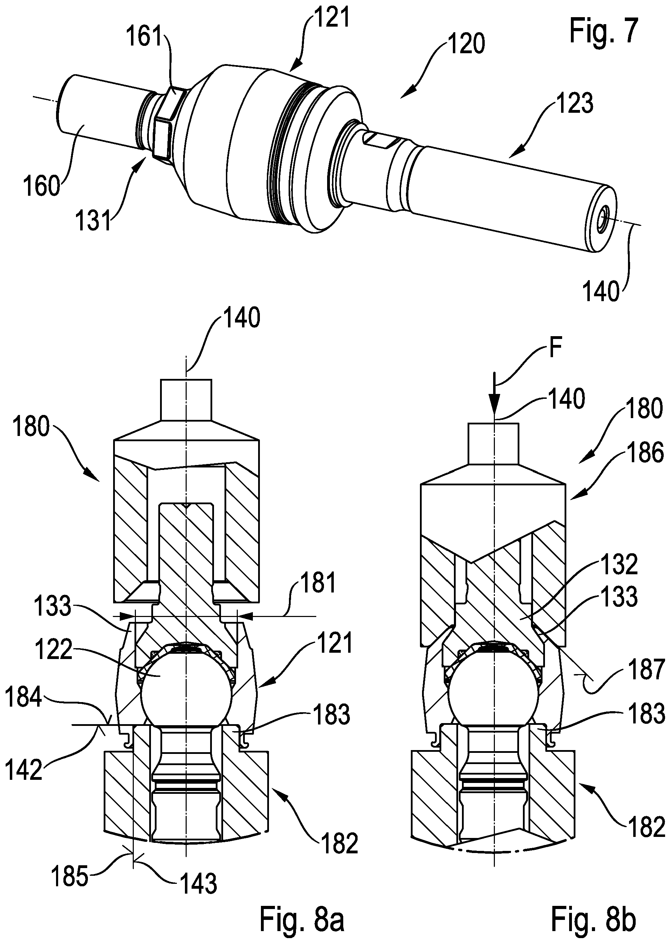

Fig. 7 ist zu entnehmen, dass eine Rotationssymmetrie des Kugelzapfens 123 durch zwei parallel beabstandete Schlüsselflächen unterbrochen ist, wobei eine der beiden Schlüsselflächen verdeckt ist. Die Mittelachse 140 des Gehäuses 121 ist deckungsgleich mit der Rotationsachse des Kugelzapfens 123. An dessen Außenumfang weist der Boden 131 eine als Sechskant 161 ausgebildete Mitnahmegeometrie auf. Durch diesen Sechskant 161 wird eine Rotationssymmetrie des Bodens 131 unterbrochen, wobei eine Rotationsachse des Bodens 131 ebenfalls deckungsgleich mit der Mittelachse 140 des Gehäuses 121 ist. Mit Hilfe des Sechskants 161 kann der Gewindezapfen 160 des Axialkugelgelenks 120 mit einem Anschlussbauteil verschraubt werden.

Fig. 8a zeigt eine als Stauchvorrichtung 180 ausgebildete Schließvorrichtung zum Schließen des Gehäuses 121. Das Schließen des Gehäuses 121 stellt einen der letzten Arbeitsgänge bei der Montage des Axialkugelgelenks 120 dar und erfolgt durch Kaltumformung der Stauchkante 133 in Richtung der Gelenkkugel 122. Bei noch nicht umgeformter Stauchkante 133, also in dem in Fig. 8a dargestellten unverschlossenen Zustand des Gehäuses 121, weist die Stauchkante 133 im Bereich der ersten Öffnung 124 einen Ausgangsdurchmesser 181 auf, der größer ist als der Durchmesser der Gelenkkugel 122. Die geöffnet dargestellte Stauchvorrichtung 180 weist ein Unterteil 182 mit einem Gegenhalter 183 auf, welcher von der Schließkraftaufnahme 139 umschließend aufgenommen wird. Die eben ausgebildete Axialanlagefläche 142 der Schließkraftaufnahme 139 liegt vollflächig an einer formkorrespondierend ausgebildeten Axialaufnahmefläche 184 des Unterteils 182 an. Das Unterteil 182 weist ferner eine zu der Radialzentrierfläche 143 der Schließkraftaufnahme 139 formkorrespondierend ausgebildete Radialaufnahmefläche 185 auf. Die Radialaufnahmefläche 185 ist ebenso wie die Radialzentrierfläche 143 als eine Zylindermantelfläche ausgebildet und bildet zusammen mit der Axialaufnahmefläche 184 Außenumfangsflächen des Gegenhalters 183.

Fig. 8b ist zu entnehmen, dass während des Schließens des Gehäuses 121 der Gegenhalter 183 der Stauchvorrichtung 180 von der Schließkraftaufnahme 139 umschließend aufgenommen wird. Die für das Schließen des Gehäuses 121 erforderliche Schließkraft F wirkt in Richtung der Mittelachse 140 des Gehäuses 121, wobei die Mittelachse 140 des Gehäuses 121 deckungsgleich mit einer Mittelachse der Stauchvorrichtung 180 ist. Die geschlossen dargestellte Stauchvorrichtung 180 weist eine Stauchglocke 186 auf, die sich während des Schließens des Gehäuses 121 auf das Unterteil 182 zu bewegt. Die Stauchglocke 186 weist einen rotationssymmetrisch ausgebildeten und sich zu dem Unterteil 182 hin erweiternden Stauchkonus 187 auf, welcher die Stauchkante 133 umschließt und während des Schließens des Gehäuses 121 die Stauchkante 133 umlaufend unter Ausbildung der gemeinsamen Kontaktfläche 132 an den Boden 131 herandrückt. Aufgrund einer relativ hohen Dicke der Stauchkante 133 ist ein Anstellen derselben um circa 45 Grad ausreichend, um während eines Fahrbetriebs in Richtung der Mittelachse 140 wirkende Kräfte sicher aufnehmen zu können.

### Bezugszeichen

- 1: Kugelgelenk, Axialkugelgelenk
- 2: Gehäuse
- 3: erste Öffnung des Gehäuses
- 4: umlaufende Umformkante
- 5: Gelenkkugel

- 20: Kugelgelenk, Axialkugelgelenk, Winkelgelenk
- 21: Gehäuse
- 22: Gelenkkugel
- 23: Kugelzapfen
- 24: erste Öffnung
- 25: Anschlusszapfen
- 26: konischer Abschnitt
- 27: Befestigungsgewinde
- 28: Mitnahmegeometrie, Innensechskantgeometrie
- 29: Kunststofflagerschale
- 30: Äquator der Gelenkkugel
- 31: Boden
- 32: gemeinsame Kontaktfläche
- 33: umlaufende Umformkante, umlaufende Stauchkante
- 34: Anschlagfläche
- 35: Federelement, Elastomerring
- 36: Ringnut
- 37: Anlagebereich
- 38: Gehäuseinnenraum
- 39: Schließkraftaufnahme
- 40: Mittelachse
- 41: Fase
- 42: Axialanlagefläche
- 43: Radialzentrierfläche
- 44: Außengewinde des Kugelzapfens
- 45: Schlüsselfläche
- 46: Balgnut
- 47: Dichtungsbalg
- 48: zweite Öffnung

- 120: Kugelgelenk, Axialkugelgelenk, Winkelgelenk
- 121: Gehäuse
- 122: Gelenkkugel
- 123: Kugelzapfen
- 124: erste Öffnung
- 131: Boden
- 132: gemeinsame Kontaktfläche
- 133: umlaufende Umformkante, umlaufende Stauchkante
- 134: Anschlagfläche
- 138: Gehäuseinnenraum
- 139: Schließkraftaufnahme
- 140: Mittelachse
- 141: Fase
- 142: Axialanlagefläche
- 143: Radialzentrierfläche
- 148: zweite Öffnung
- 160: Gewindezapfen
- 161: Mitnahmegeometrie, Sechskant

- 180: Schließvorrichtung, Stauchvorrichtung
- 181: Ausgangsdurchmesser der Stauchkante
- 182: Unterteil der Stauchvorrichtung
- 183: Gegenhalter
- 184: Axialaufnahmefläche
- 185: Radialaufnahmefläche
- 186: Stauchglocke
- 187: Stauchkonus
- F: Schließkraft

## Patentansprüche

1. Kugeigeienk (20, 120), insbesondere für ein Fahrwerk eines Kraftfahrzeugs, das Kugelgelenk (20, 120) aufweisend ein Gehäuse (21, 121) mit einer ersten Öffnung (24, 124), wobei die erste Öffnung (24, 124) von einer. umlaufenden Umformkante (33, 133) umschlossen ist, **dadurch gekennzeichnet, dass** das Gehäuse (21,121) an einem der ersten Öffnung (24, 124) gegenüberliegenden Ende eine sich, muldenförmig nach gehäuseinnen in Richtung der ersten Öffnung (24, 1-24) erstreckende Schiießkraftaufnahme (39, 139) zur Aufnahme einer für ein Umformen der umlaufenden Umformkante (33, 133) erforderlichen Schließkraft F aufweist, wobei die Schließkraftaufnahme (39, 139) nach Art einer säulenförmigen und zugleich sacklochartigen Ausnehmung ausgebildet ist.

2. Kugelgelenk (20, 120) nach Anspruch 1, **dadurch gekennzeichnet, dass** die Schließkfäftaufrfahme (39,139) rotationssymmetrisch ausgebildet ist und eine, Rotationsachse aufweist, die mit einer Mittelachse (40, 140) des Gehäuses (21, 121) zusammenfällt.

3. Kugelgelenk (20, 120) nach Anspruch 2, **dadurch gekennzeichnet, dass** die Schließkraftäutnätlme (39, 139) eine umiäüfende, ebene Axialanlagefläche (42, 142) aufweist, welche sich senkrecht zu der Mittelachse (40, 140) erstreckt und in Richtung der Mittelachse (40, 140), freiliegt.

4. Kugeldeienk (20, 120) nach Anspruch 3, **dadurch gekennzeichnet, dass** die Axialanlagefläche (42, 142) als eine spanend bearbeitete Fläche ausgebildet ist.

5. Kugelgelenk (20,120) nach Anspruch 3 oder 4, **dadurch gekennzeichnet, dass** die Axiälanlagefläche (42, 142) als eine Kreisringfläche ausgebildet ist.

6. Kugelgelenk (20, 120) nach einem der Aheprüche 3 bis 5, **dadurch gekennzeichnet, dass** die Schließkraftaufnahme (39, 139) eine als eine Zylindermantelfläche ausgebildete' Radialzentrierfläche (43, 143) aufweist, welche angrenzend an die Axialanlagefläche (42; 142) angeordnet ist.

7. Kugelgelenk (20, 120) nach einem der vorhergehenden Ansprüche, **dadurch gekennzeichnet, dass** die Schließkraftaufnahme (39, 139) an einem nach gehäuseaußen weisenden Rand eine umlaufende Fase (41, 141) aufweist.

8. Kugelgelenk (20, 120) nach einem der Ansprüche 3 bis 7, **dadurch gekennzeichnet, dass** das Kugelgelenk (20, 120) einen mit einer Gelenkkugel (22, 122) dreh- und schwenkbeweglich in dem Gehäuse (21, 121) gelagerten Kugelzapfen (23, 123) aufweist, welcher sich in einem nicht ausgelehkten Zustand aus einer zweiten Öffnung (48, 148) des Gehäuses (21, 121) heraus in Richtung der Mittelachse (40, 140) erstreckt.

9. Kugelgelenk (20, 120) nach Anspruch 8, **dadurch gekennzeichnet, dass** die Axialanlageflache (42, 142) bei einer Projektion in Richtung der Mittelachse (40, 140) teilweise außerhalb der Gelenkkugel (22, 122) liegt.

10. Kugelgelenk (20, 120) nach einem def Ansprüche 2 bis 9, **dadurch gekennzeichnet**, däss die erste Öffnung (24, 124) des Gehäuses (21, 121) durch einen Boden (31, 131) verschlossen ist.

11. Kugelgelenk (20, 120) nach Anspruch 10, dadurch gekenhzeichrfet, dass der Boden (31, 131) und die umlaufende Umformkante (33, 133) eine gemeinsame Koritaktfläche (32, 132) aufweisen, welche als eine Kegelstumpfmantelfläche oder als eine Kreisringfläche ausgebildet ist.

12. Kugelgelenk (120) nach Anspruch 10 oder 11, **dadurch gekennzeichnet, dass** der Boden (131) einen einstückig mit diesem ausgebildeten und sich in Richtung der Mittelachse (140) erstreckenden Gewindezapfen (160) aufweist.

13. Kugelgelenk (20, 120) nach einem der Ansprüche 2 bis 12, **dadurch gekennzeichnet, dass** das Gehäuse (21, 121) hülsenartig ausgebildet ist mit einem das Gehäuse (21, 121) vollständig in Richtung der Mittelachse (40, 140) durchsetzenden Gehäuseinnenraum (38, 138).

14. Kugelgelenk (20) nach einem der Ansprüche 2 bis 13, **dadurch gekennzeichnet, dass** das Gehäuse (21) einen einstückig mit diesem verbundenen Anschlusszapfen (25) aufweist, welcher sich zumindest im Wesenttichen senkrecht zu der Mittelachse (40) erstreckt.

15. Verfahren zur Montage eines, Kugelgelenks (20, 120) nach einem der Ansprüche 1 bis 14, **dadurch gekennzeichnet, dass** während eines Schiießens des Gehäuses (21, 121) ein Gegenhalter (183) einer Schließvorrichtung (180) von der Schließkraftaufnahme (39, 139) umschließend aufgenommen wird.

## Claims

1. Ball joint (20, 120), in particular for a chassis of a motor vehicle, the ball joint (20, 120) having a housing (21, 121) with a first opening (24, 124), the first opening (24, 124) being enclosed by a circumferential reshaped edge (33, 133), **characterized in that** the housing (21, 121) has, at an end which lies opposite the first opening (24, 124), a caulking force absorption means (39, 139) which extends in a trough-shaped manner towards the interior of the housing in the direction of the first opening (24, 124) for absorbing a caulking force F which is required for reshaping the circumferential reshaped edge (33, 133), the caulking force absorption means (39, 139) being configured in the form of a recess which is pillar-shaped and at the same time blind bore-like.

2. Ball joint (20, 120) according to Claim 1, **characterized in that** the caulking force absorption means (39, 139) is of rotationally symmetrical configuration and has a rotational axis which coincides with the centre axis (40, 140) of the housing (21, 121).

3. Ball joint (20, 120) according to Claim 2, **characterized in that** the caulking force absorption means (39, 139) has a circumferential, planar axial bearing face (42, 142) which extends perpendicularly with respect to the centre axis (40, 140) and is exposed in the direction of the centre axis (40, 140).

4. Ball joint (20, 120) according to Claim 3, **characterized in that** the axial bearing face (42, 142) is configured as a machined face.

5. Ball joint (20, 120) according to Claim 3 or 4, **characterized in that** the axial bearing face (42, 142) is configured as a circularly annular face.

6. Ball joint (20, 120) according to one of Claims 3 to 5, **characterized in that** the caulking force absorption means (39, 139) has a radial centring face (43, 143) which is configured as a cylindrical shell face and is arranged adjacently with respect to the axial bearing face (42, 142).

7. Ball joint (20, 120) according to one of the preceding claims, **characterized in that** the caulking force absorption means (39, 139) has a circumferential bevel (41, 141) at an edge which points towards the exterior of the housing.

8. Ball joint (20, 120) according to one of Claims 3 to 7, **characterized in that** the ball joint (20, 120) has a ball pivot (23, 123) which is mounted in the housing (21, 121) such that it can be moved pivotably by means of a joint ball (22, 122), which ball pivot (23, 123) extends in a non-deflected state out of a second opening (48, 148) of the housing (21, 121) in the direction of the centre axis (40, 140).

9. Ball joint (20, 120) according to Claim 8, **characterized in that** the axial bearing face (42, 142) lies partially outside the joint ball (22, 122) in the case of a projection in the direction of the centre axis (40, 140).

10. Ball joint (20, 120) according to one of Claims 2 to 9, **characterized in that** the first opening (24, 124) of the housing (21, 121) is closed by way of a bottom (31, 131) .

11. Ball joint (20, 120) according to Claim 10, **characterized in that** the bottom (31, 131) and the circumferential reshaped edge (33, 133) have a common contact face (32, 132) which is configured as a frustoconical shell face or as a circularly annular face.

12. Ball joint (120) according to Claim 10 or 11, **characterized in that** the bottom (131) has a threaded pin (160) which is configured in one piece with it and extends in the direction of the centre axis (140).

13. Ball joint (20, 120) according to one of Claims 2 to 12, **characterized in that** the housing (21, 121) is of sleeve-like configuration with a housing interior space (38, 138) which penetrates the housing (21, 121) completely in the direction of the centre axis (40, 140).

14. Ball joint (20) according to one of Claims 2 to 13, **characterized in that** the housing (21) has a connector pin (25) which is connected in one piece to the said housing (21) and extends at least substantially perpendicularly with respect to the centre axis (40).

15. Method for assembling a ball joint (20, 120) according to one of Claims 1 to 14, **characterized in that**, during caulking of the housing (21, 121), a counterholder (183) of a caulking apparatus (180) is received in an enclosing manner by the caulking force absorption means (39, 139).

## Revendications

1. Joint à rotule (20, 120), destiné notamment à un mécanisme de roulement d'un véhicule automobile, le joint à rotule (20, 120) comprenant un boîtier (21, 121) pourvu d'une première ouverture (24, 124), la première ouverture (24, 124) étant fermée par un bord de déformation circonférentiel (33, 133), **caractérisé en ce que** le boîtier (21, 121) comporte à une extrémité opposée à la première ouverture (24, 124) un moyen de réception de force de fermeture (39, 139) qui s'étend en forme d'auge vers l'intérieur du boîtier en direction de la première ouverture (24, 124) et qui est destiné à recevoir une force de fermeture F requise pour déformer le bord de déformation circonférentiel (33, 133), le moyen de réception de force de fermeture (39, 139) étant conçu à la manière d'un évidement en forme de colonne et en même temps de type borgne.

2. Joint à rotule (20, 120) selon la revendication 1, **caractérisé en ce que** le moyen de réception de force de fermeture (39, 139) est à symétrie de révolution et comporte un axe de rotation qui coïncide avec un axe central (40, 140) du boîtier (21, 121),

3. Joint à rotule (20, 120) selon la revendication 2, **caractérisé en ce que** le moyen de réception de force de fermeture (39, 139) comporte une surface d'appui axiale (42, 142) plane et circonférentielle qui s'étend perpendiculairement à l'axe central (40, 140) et qui est exposée dans la direction de l'axe central (40, 140) .

4. Joint à rotule (20, 120) selon la revendication 3, **caractérisé en ce que** la surface d'appui axiale (42, 142) est conçue comme une surface usinée par enlèvement de copeaux.

5. Joint à rotule (20, 120) selon la revendication 3 ou 4, **caractérisé en ce que** la surface d'appui axiale (42, 142) est conçue comme une surface annulaire.

6. Joint à rotule (20, 120) selon l'une des revendications 3 à 5, **caractérisé en ce que** le moyen de réception de force de fermeture (39, 139) comporte une surface de centrage radial (43, 143) conçue comme une surface d'enveloppe cylindrique qui est adjacente à la surface d'appui axiale (42, 142).

7. Joint à rotule (20, 120) selon l'une des revendications précédentes, **caractérisé en ce que** le moyen de réception de force de fermeture (39, 139) comporte un chanfrein circonférentiel (41, 141) sur un bord pointant vers l'extérieur du boîtier.

8. Joint à rotule (20, 120) selon l'une des revendications 3 à 7, **caractérisé en ce que** le joint à rotule (20, 120) comporte un pivot (23, 123) qui est monté dans le boîtier (21, 121) de manière rotative et pivotante avec une tête sphérique (22, 122) et qui s'étend dans un état non dévié hors d'une deuxième ouverture (48, 148) du boîtier (21, 121) en direction de l'axe central (40, 140).

9. Joint à rotule (20, 120) selon la revendication 8, **caractérisé en ce que** la surface d'appui axiale (42, 142) est située en partie à l'extérieur de la tête sphérique (22, 122) dans le cas d'une projection en direction de l'axe central (40, 140).

10. Joint à rotule (20, 120) selon l'une des revendications 2 à 9, **caractérisé en ce que** la première ouverture (24, 124) du boîtier (21, 121) est fermée par un fond (31, 131).

11. Joint à rotule (20, 120) selon la revendication 10, **caractérisé en ce que** le fond (31, 131) et le bord de déformation circonférentiel (33, 133) comportent une surface d'appui commune (32, 132) qui est conçue comme une surface d'enveloppe en cône tronqué ou comme une surface annulaire.

12. Joint à rotule (120) selon la revendication 10 ou 11, **caractérisé en ce que** le fond (131) comporte une tige filetée (160) formée d'une seule pièce avec celui-ci et s'étendant en direction de l'axe central (140).

13. Joint à rotule (20, 120) selon l'une des revendications 2 à 12, **caractérisé en ce que** le boîtier (21, 121) est en forme de manchon comprenant un espace intérieur (38, 138) traversant entièrement le boîtier (21, 121) en direction de l'axe central (40, 140).

14. Joint à rotule (20) selon l'une des revendications 2 à 13, **caractérisé en ce que** le boîtier (21) comporte une broche de liaison (25) reliée d'une seule pièce à celui-ci et s'étendant au moins sensiblement perpendiculairement à l'axe central (40).

15. Procédé de montage d'un joint à rotule (20, 120) selon l'une des revendications 1 à 14, **caractérisé en ce que**, lors d'une fermeture du boîtier (21, 121), un contre-support (183) d'un dispositif de fermeture (180) est reçu par le moyen de réception de force de fermeture (39, 139) en étant enfermé par celui-ci.
